# NEUE EUROPÄISCHE PATENTSCHRIFT

(11) **EP 1 368 113 B2**
(45) Veröffentlichungstag und Bekanntmachung des Hinweises auf die Entscheidung über den Einspruch: **07.01.2015**
(45) Hinweis auf die Patenterteilung: 14.06.2006
(21) Anmeldenummer: 02752876.9
(22) Anmeldetag: 06.03.2002
(51) Int. Cl.: B01F 13/00

(54) **DYNAMISCHER MISCHER**
DYNAMIC MIXER
MELANGEUR DYNAMIQUE

(30) Priorität: 15.03.2001 DE 10112904
(43) Veröffentlichungstag der Anmeldung: 10.12.2003
(73) Patentinhaber: 3M Deutschland GmbH, 41453 Neuss (DE)
(72) Erfinder: PAUSER, Helmut, 86911 Diessen (DE); WAGNER, Ingo, 82237 Wörthsee (DE)
(74) Vertreter: Vossius & Partner
(86) Internationale Anmeldenummer: PCT/EP2002/002481
(87) Internationale Veröffentlichungsnummer: WO 2002/074426

(56) Entgegenhaltungen:
- EP-A- 0 993 863
- EP-A- 1 099 470
- DE-U- 29 818 499
- US-A1- 2001 005 338

## Beschreibung

Die vorliegende Erfindung betrifft einen dynamischen Mischer zum Mischen von mindestens zwei Pastenkomponenten mit unterschiedlichen Volumenverhältnissen, umfassend ein Gehäuse, das eine Verzögerungskammer für die Pastenkomponente mit dem größeren Volumenanteil aufweist. Der Mischer eignet sich insbesondere zum Mischen von Pastenkomponenten mit einer verhältnismäßig hohen Viskosität von beispielsweise größer als 800 Pas.

Aus der DE 298 18 499 U ist ein Mischer zur Herstellung von Pasten aus Komponenten mit ungleichen Volumenanteilen bekannt, der eine Verzögerungskammer aufweist. Diese bildet einen den Weg von einer Einlassöffnung zu einem Mischerelement verlängernden, längs eines Bogens um die Längsachse verlaufenden Umwegkanal. Dieser Mischer stellt eine Weiterentwicklung des aus der EP 0 492 412 A1 bekannten dynamischen Mischers dar.

Bekannt sind auch sogenannte statische Mischer, die im Gegensatz zu einem dynamischen Mischer keine beweglichen Teile aufweisen. Derartige Mischer eignen sich nur zum Mischen und Ausbringen von verhältnismäßig dünnflüssigen Substanzen, vgl. EP 0 885 651 A1, EP 0 664 153 A1 oder EP 0 584 428 A1.

Im Unterschied zum dynamischen Mischer, der die zu mischenden Komponenten verwirbelt, erfolgt beim statischen oder Strömungsmischer das Mischen durch wiederholte Strangteilung.

Bei Mischern mit einer Verzögerungskammer ist diese aus Gründen der Gesamtlängenreduktion vorzugsweise so gestaltet, dass die vorströmende Pastenkomponente, die längs in den Mischer eintritt, regelmäßig um etwa 90° abgelenkt wird. Die eigentliche Verzögerungsstrecke liegt somit quer zum drehbar gelagerten Mischelement, vgl. EP 1 099 470 A1 und EP 0 993 863 A2.

Am Ende der Verzögerungsstrecke fließt die Pastenkomponente entweder direkt in die Mischkammer oder die Pastenkomponente tritt in die Mischkammer um etwa 90° versetzt ein, so dass sich die Fließrichtung der Pastenkomponente abermals ändert.

Die Verzögerungskammer kann sich dabei sowohl in nur einer Richtung mit einem Auslass als auch in zwei Richtungen mit entsprechend zwei Auslässen erstrecken.

Die Umlenkung des gesamten Pastenstroms einer Komponente induziert in der Paste sehr hohe Reibungsverluste die den Strömungswiderstand stark erhöhen. Die zum Fördern der Pasten notwendige Kraft, die über Förderkolben auf die Pasten übertragen wird, steigt deshalb stark an.

Es können deshalb die bisher bekannten dynamischen Mischer nur zum Mischen von Pasten verwendet werden, die eine mittlere Konsistenz und Standfähigkeit aufweisen. Solche Pasten haben üblicherweise eine Viskosität im Bereich von 200 bis 800 Pas.

Das Weglassen der Verzögerungskammer ist aber nicht möglich, da gerade Pasten mit hoher Standfestigkeit und Viskosität zu einem besonders starken Vorlauf einer Komponente neigen.

Die primäre Aufgabe der vorliegenden Erfindung besteht somit darin, einen verbesserten Mischer, insbesondere zum Mischen hochviskoser Pasten, zur Verfügung zu stellen.

Diese Aufgabe wird gelöst durch Bereitstellung eines dynamischen Mischers und eines Verfahrens, wie es in den Ansprüchen beschrieben ist.

Mit den Begriffen "umfassen" oder "enthalten" wird eine nicht abschließende Aufzählung von Merkmalen eingeleitet. Der Umstand, dass in den Ansprüchen das Wort "ein" vor Nennung eines Merkmals verwendet wird, schließt nicht aus, dass die genannten Merkmale mehrmals vorhanden sein können, im Sinne von "mindestens ein".

Es hat sich überraschenderweise herausgestellt, dass beim Anbringen einer Öffnung innerhalb der Verzögerungskammer, die gegenüber der den Pastenstrom in Strömungsrichtung stoppenden oder abschließenden Begrenzungswand zurückversetzt ist, die Funktion dieser Kammer - sicherzustellen, dass keine Pastenkomponente ungemischt aus dem Mischer austritt bzw. einen verzögerten Eintritt in den Mischraum zu gewährleisten - weitgehend erhalten bleibt.

Die Begrenzungswand ist ein Bestandteil der Verzögerungskammer und befindet sich regelmäßig an der Stelle, die von der Einlassöffnung, die in die Verzögerungskammer mündet, am entferntesten liegt. Da die Verzögerungskammer üblicherweise ringsegmentartig gestaltet ist und längs eines Bogens um die Längsachse des Mischers verläuft, stellt die Begrenzungswand eine Stirnfläche des Ringsegments dar, die je nach Ausführungsform planar oder gekrümmt ausgebildet sein kann.

Keine Begrenzungswand der Verzögerungskammer im Sinne der Erfindung ist eine der Einlassöffnung gegenüber angeordneten Prallfläche auf die die einströmende Pastenkomponente nach Eintreten in den Mischer ohne wesentlich abgelenkt zu werden im wesentlichen unmittelbar trifft.

Überraschenderweise hat sich gezeigt, dass die Verzögerungskammer vor dem Eintreten der Pastenkomponente in den eigentlichen Mischraum zunächst weitgehend vollständig gefüllt wird. Dies lässt sich durch einen von den rotierenden Mischflügeln erzeugten Strömungswiderstand erklären, der die Paste solange daran hindert, in den Mischraum einzutreten, bis die Verzögerungskammer gefüllt ist.

Dadurch, dass die Öffnung, die von der Verzögerungskammer in den Mischraum führt, gegenüber der Begrenzungswand zurückversetzt ist, kommt es zu einer Reduktion der vom Mischgerät aufzubringenden Förderkraft, da die Pastenkomponente je nach Anordnung der Öffnung nach Befüllen der Verzögerungskammer nur noch geringfügig abgelenkt wird.

Die in die Verzögerungskammer einströmende Pastenkomponente wird beim Einströmen zunächst um etwa 90° umgelenkt und befüllt die Verzögerungskammer ohne im wesentlichen in die Mischkammer zu gelangen. Da in diesem Zustand die Mischkammer noch nicht gefüllt ist, sind die hierbei aufzubringenden Förderkräfte verhältnismäßig unkritisch.

Gelangt der Pastenstrom jedoch an die Begrenzungswand, bewirkt der sich aufbauende Staudruck, dass die Pastenkomponente durch die rückversetzte Öffnung in den Mischraum gelangt.

Die zur Förderung vom Mischgerät aufzubringenden Kräfte nehmen mit zunehmender Entfernung der Öffnung von der Begrenzungswand ab, so dass auch hochviskose Materialien mit dem erfindungsgemäßen Mischer dynamisch gemischt werden können.

Der erfindungsgemäße Mischer erlaubt somit das Bereiten von Pasten, die bei der Komponente mit dem größeren Volumenanteil eine deutlich höhere Viskositäten als 800 Pas aufweisen, ohne dass es zu einer mechanischen Überlastung des Systems, umfassend das Mischgerät, die eingelegte Kartusche und den Mischer, kommt.

Die Viskosität lässt sich beispielsweise mit einem Brookfield DV III Rheometer (Spindel HB 5, Balkenbreite 15,5 mm, Geschwindigkeit 5 U/min, Ablesung 20s nach Start) bestimmen.

Konkret kann die Viskosität auf folgende Weise bestimmt werden:

Das Rheometer wird nach dem Einschalten und der Justierung mit der Messspindel HB5 (Balkenbreite = 15,5mm) versehen. Danach wird die zu messende Paste mit dem größeren Volumenanteil zunächst etwa 40 sec. lang mit den Händen geknetet und dann möglichst blasenfrei in einen Messbecher gefüllt. In Schlauchbeuteln verpacktes Material wird direkt aus einem handelsüblichen Mischgerät (beispielsweise Pentamix® 2 der Firma 3M ESPE AG) in den Messbecher gefüllt. Die Füllhöhe soll mindestens 30mm betragen.

Ohne Zeitverzug wird danach der befüllte Messbecher in das Becheraufnahmestativ gestellt, und die Messspindel mittig in die Paste abgesenkt. Nun wird die Prüfung gestartet. Die Ablesung des im Display als mPas angezeigten Messwertes erfolgt 20 sec. nach Start der Messung.

Zu beachten ist, dass zu keiner Zeit der Messung der Messbecher durch die Rotation der Spindel mitgezogen werden darf.

Unter dem Begriff Öffnung im Sinne der vorliegenden Erfindung sind sowohl Einlassöffnungen als auch Auslassöffnungen zu verstehen. Dies ist abhängig davon, in weicher Richtung die zu mischenden Substanzen fließen bzw. gepresst werden.

Ein Mischer weist üblicherweise zwei Einlassöffnungen und nur eine Auslassöffnung auf.

Vorteilhaft sind runde, ovale Öffnungen und/oder Öffnungen in Nieren- oder Sichelform, insbesondere Öffnungen mit abgerundeten Kanten und Ecken.

Eine derartige Gestaltung ermöglicht eine optimierte Anordnung der Einlassöffnungen um die sich üblicherweise im Zentrum eines dynamischen Mischers befindliche Aufnahmeöffnung für die Antriebswelle. Ferner erlaubt diese Gestaltung das Ausnützen nahezu der gesamten für die Eintrittsöffnungen zur Verfügung stehenden Oberfläche eines dynamischen Mischers.

Die erfindungsgemäße Vorrichtung weist vorzugsweise mindestens zwei, gegebenenfalls aber auch drei oder vier Öffnungen auf.

Diese Öffnungen sind üblicherweise symmetrisch um die Öffnung für die Antriebswelle angeordnet.

Die erfindungsgemäße Vorrichtung in der Form eines dynamischen Mischers umfasst üblicherweise mindestens drei Bauteile, insbesondere eine Basisplatte, in die die Einlassöffnungen und die Aufnahmeöffnung für die Antriebswelle eingelassen sind und einen in der Basisplatte drehbar gelagerten Rotor , an den Mischflügel angebracht sind und eine Formnut zur Aufnahme der Antriebswelle, sowie das Gehäuse in dem der Rotor läuft.

Die Form der Nut für die Antriebswelle ist beliebig, unter der Vorraussetzung, dass eine zum Anmischen ausreichende Kraftübertragung von der Antriebswelle auf die Mischflügel erfolgen kann.

Öffnungen in kantiger Form haben sich zur Übertragung des Drehmoments von der Antriebswelle auf den Rotor als günstig erwiesen. Vorzugsweise ist die Formnut für die Antriebswelle dreieckig, viereckig, quadratisch, fünfeckig, sechseckig, siebeneckig, achteckig gestaltet oder weist eine andere kantige geometrische Form auf.

Unter Mischelement ist der Teil des Mischers zu verstehen, der drehbar gelagert ist, über Mischflügel verfügt und durch eine Mischerwelle angetrieben werden kann.

Unter Verzögerungskammer im Sinne der Erfindung ist eine Kammer bzw. ein Umwegkanal zu verstehen, den eine Pastenkomponente passieren muss, bevor sie in die Mischkammer eintreten kann. Die Verzögerungskammer weist eine Einlassöffnung, die üblicherweise mit der Einlassöffnung des Mischers übereinstimmt, und mindestens eine Auslassöffnung auf, die in die Mischkammer mündet.

Die Gestalt der Verzögerungskammer ist grundsätzlich beliebig. Eine sich längs eines Bogens um die Längsachse des Mischers erstreckende Form hat sich als vorteilhaft erwiesen, um die Baulänge des Mischers kurz zu halten. Die Verzögerungskammer hat vorzugsweise die Form eines Ringsegments, das sich über einen Winkelbereich von größer 0 bis kleiner 180°, vorzugsweise im Bereich von 90 bis kleiner 180° erstreckt.

Die Kammer weist u.a. eine in Strömungsrichtung einer Pastenkomponente befindliche Begrenzungswand auf, an der sich die Pastenkomponente staut. Die Kammer verfügt erfindungsgemäß auch über mindestens eine Öffnung, die in die Mischkammer mündet und die gegenüber der Begrenzungswand zurückversetzt angeordnet ist.

Unter dem Begriff zurückversetzt im Sinne der Erfindung ist eine Anordnung zu verstehen, bei der die Öffnung nicht unmittelbar an die Begrenzungswand angrenzt, sondern von dieser abgesetzt angeordnet ist.

Weist die Verzögerungskammer nur diese eine Öffnung in die Mischkammer auf, bewirkt dies, dass die aufgestaute Pastenkomponente nicht an der Stelle in die Mischkammer gelangt, an der sich die Begrenzungswand befindet, sondern nur an einer dieser gegenüber in Strömungsrichtung zurückversetzten Stelle. Vorzugsweise ist diese Öffnung längs der Umfangrichtung gegenüber der Begrenzungswand zurückversetzt, insbesondere um einen Winkel mit Zentrum in der Mischerachse im Bereich von 90 bis 180°.

Die Pastenkomponente mit dem größeren Volumenanteil wird im Mischer somit üblicherweise zunächst bogenförmig um die Längsachse geführt, dort an der Begrenzungswand gestaut und kommt mit der Pastenkomponente mit dem kleineren Volumenanteil erst im Bereich des Mischelements in Berührung.

Sobald die Verzögerungskammer gefüllt ist, erfährt die in den Mischer eintretende, nachströmende Pastenkomponente mit dem größeren Volumenanteil bis zum Eintreten in die Mischkammer vorteilhafterweise nur eine Richtungsumlenkung, die kleiner als 90°, vorzugsweise kleiner als 45° ist.

Auf diese Weise kann eine Reduzierung der Kraft erreicht werden, die zum Ausbringen insbesondere von hochviskosen Pasten, beispielsweise mit einer Viskosität größer als 800 Pas, erforderlich ist.

Das Verhältnis von Volumen der Verzögerungskammer zum Volumen der Mischkammer liegt üblicherweise im Bereich von 1 : 1 bis 1 : 20, vorzugsweise im Bereich von 1 : 3 bis 1 : 5. Üblicherweise weist die Verzögerungskammer ein Absolutvolumen im Bereich von 0,1 bis 10 ml, vorzugsweise im Bereich von 0,3 bis 2 ml auf. Zum Volumen der Verzögerungskammer gehört auch der Bereich der Einlassöffnung, der in die Verzögerungskammer mündet. Das Volumen der Mischkammer ergibt sich als Differenz des durch das Gehäuse des Mischers bereitgestellten Gesamtvolumens abzüglich des Volumens der Verzögerungskammer und des Volumens, das durch die Mischwendel eingenommen wird.

Liegt das Verhältnis außerhalb dieses Bereichs kommt es regelmäßig entweder zu einer nicht ausreichenden Verzögerung der einen Pastenkomponente oder der Mischer verfügt über ein zu großes Totvolumen, verbunden mit einer unerwünscht großen Menge an zu verwerfender Paste.

Die Form der Öffnung, die in die Mischkammer mündet, ist grundsätzlich beliebig. Im wesentlichen runde, rechteckige und dreieckige Öffnungen sind geeignet. Die Öffnungsfläche beträgt üblicherweise nur wenige mm², vorzugsweise 1 bis 100 mm².

In einer bevorzugten Ausführungsform weist die Verzögerungskammer mehrere, insbesondere zwei oder drei Öffnungen auf, die in die Mischkammer münden. Die weiteren Öffnungen können sich dabei auch unmittelbar im Bereich der Begrenzungswand befinden bzw. an diese angrenzen.

Eine unmittelbar im Bereich der Begrenzungswand angeordnete Öffnung in die Mischkammer ist von Vorteil, wenn sichergestellt werden soll, dass die Luft, die durch das Einströmen der zu verzögernden Pastenkomponente in der Verzögerungskammer komprimiert werden würde, in die Mischkammer entweichen kann. Dies ist insbesondere dann günstig, wenn sichergestellt werden soll, dass keine Luft in der zu mischende Paste eingeschlossen werden soll. Handelt es sich bei der Paste um eine dentale Abformmasse führt in die gemischte Paste eingeschlossene Luft regelmäßig zu einer verschlechterten Qualität eines unter Verwendung der gemischten Paste genommenen Gebissabdrucks.

Die Verzögerungskammer kann symmetrisch oder asymmetrisch im Mischer angeordnet sein. Sie kann sich nur in einer Umlaufrichtung, aber auch in beiden Umlaufrichtungen erstrecken.

Die zurückversetzte Öffnung ist in der Verzögerungskammer so angeordnet, dass sie zumindest in einem Punkt der Einlassöffnung in die Verzögerungskammer gegenübersteht. Vorzugsweise steht die Öffnung in der Verzögerungskammer, die in die Mischkammer mündet, halbversetzt der Einlassöffnung gegenüber. In dieser Ausführungsform ist es somit theoretisch möglich, dass ein Teil der Pastenkomponente direkt in die Mischkammer gelangt, ohne vorher in der Verzögerungskammer gestaut zu werden. Insbesondere bei hochviskosen Pasten hat sich aber überraschenderweise gezeigt, dass dies normalerweise nicht eintritt, sondern zunächst die Verzögerungskammer gefüllt wird.

Um eine Ablenkung der Strömungsrichtung einer der Pastenkomponenten in die Verzögerungskammer zu bewirken, ist es vorteilhaft, dass gegenüber der Einlassöffnung in die Verzögerungskammer eine Prallfläche angeordnet ist, die verhindert, dass die Pastenkomponente ohne in die Verzögerungskammer umgelenkt zu werden, in die Mischkammer eintritt. Diese Prallfläche ergibt sich üblicherweise automatisch, wenn die Öffnung der Verzögerungskammer, die in die Mischkammer mündet, gegenüber der Einlassöffnung - in Strömungsrichtung gesehen - etwas seitlich versetzt angeordnet ist.

In einer besonders bevorzugten Ausführungsform stehen etwa 50% der Öffnungsfläche, die in die Mischkammer mündet, der Einlassöffnung gegenüber. Bei einer derartigen Anordnung sind die durch Umlenkung des Pastenstroms auftretenden Reibungskräfte weitgehend minimiert, ohne die Funktion der Vorkammer zu verschlechtern.

In Abhängigkeit von Drehzahl der Mischflügel und/oder Viskosität der zu mischenden Komponenten ist das Vorhandensein einer Prallfläche gegebenenfalls nicht zwingend erforderlich. Der von den rotierenden .Mischflügeln erzeugte Strömungswiderstand kann ausreichen, damit die eine Pastenkomponente bevor sie in der Mischkammer mit der andem Pastenkomponente gemischt und ausgebracht wird, in die Verzögerungskammer eintritt.

Das Flächenverhältnis der Öffnungen des Einlasses für die Pastenkomponente mit dem größeren Volumenanteil zur Auslassöffnung des Mischers für die gemischte Paste liegt üblicherweise im Bereich von 1 : 1 bis 1 : 5. Ein davon abweichendes Verhältnis hat sich insbesondere beim Mischen von hochviskosen Pasten in Folge der auftretenden Reibungsverluste als nachteilig erwiesen.

Geeignete Materialien aus denen sich der Mischer fertigen lässt umfassen Metall, Glas und/oder Kunststoffe, wobei letztere bevorzugt sind.

Geeignete Kunststoffe sind beispielsweise solche, die einen E-Modul im Bereich von 200 bis 3000 N/mm² und/oder eine Reißdehnung im Bereich von 50 bis 200% aufweisen.

Geeignete Materialien für den Mischer umfassen PA, PE, OPP, PP, PTFE, PC, PS und/oder POM. Die Materialien können auch in faserverstärkter und/oder gefüllter Form verwendet werden.

Geeignete Fasem und Füllstoffe umfassen Glasfasern/ -partikel und Kohlenstofffasern/ -partikel.

Geeignete Mischer und/oder Kartuschenfronten lassen sich beispielsweise im Spritzgussverfahren, gegebenenfalls in einem 2-K-Spritzgussverfahren herstellen. Denkbar ist aber auch die Herstellung durch spanabhebende Verfahren.

Der erfindungsgemäße Mischer lässt sich auf allen Gebieten der Technik, insbesondere zum Mischen von hochviskosen, pastösen und/oder dickflüssigen Massen einsetzen.

Hierunter sind allgemein Stoffe zu verstehen, die im Lagerzustand getrennt in mindestens zwei Komponenten aufbewahrt werden und vor der Verwendung gemischt werden müssen.

Beispielhaft seien genannt: Kleber, Fugendichtmassen, Lacke.

Vorzugsweise lassen sich die erfindungsgemäßen Mischer im Dentalbereich einsetzen. Besonders eignen sich die erfindungsgemäßen Vorrichtungen zum Mischen hochviskoser Abformmaterialien, die beispielsweise aus Schlauchbeuteln, die in geeignete Kartuschen eingeschoben sind, mit elektrisch angetriebenen Kolben ausgepresst werden. Denkbar und möglich ist auch die Ausbringung der Materialien aus geeigneten Kartuschen, die direkt mit dem Material befüllt sind ohne dass ein Schlauchbeutel verwendet wird.

Als Materialien seien beispielhaft genannt Silikone, Polyether, Polyethersilikone, Epoxide und Polyurethane.

Gegenstand der Erfindung ist auch die Kombination aus einem dynamischen Mischer und einem elektrisch betreibbaren Mischgerät, auf das der Mischer aufgesetzt bzw. angebracht werden kann. Geeignete Mischgeräte verfügen über eine Mischerwelle und einen oder mehrere Förderkolben.

Es hat sich gezeigt, dass zur Erzielung eines brauchbaren Mischergebnisses ohne mechanische Beeinträchtigung des Mischgeräts, der Kartuschen, der Schlauchbeutel oder des Mischers die Förderkraft, die über die Kolben auf die zu mischenden Pasten übertragen wird, den Betrag von etwa 4000 N nicht wesentlich übersteigen soll.

Ein geeignetes Mischgerät ist beispielsweise in der EP 0 541 972 A beschrieben. Gegenstand der vorliegenden Erfindung ist auch ein Verfahren zum Mischen von mindestens zwei Pastenkomponenten mit unterschiedlichen Volumenanteilen.

Das Verfahren umfasst dabei die folgenden Schritte:
a) Ausbringen von mindestens zwei Pastenkomponenten A und B aus einem Behältnis, vorzugsweise aus einem kartuschenähnlichen Behältnis, in das gegebenenfalls Schlauchbeutel eingelegt werden können,
b) Einbringen der Komponenten A und B in einen dynamischen Mischer, der mit dem Behältnis verbunden werden kann,
c) Mischen der Komponenten A und B unter Verwendung des dynamischen Mischers,
d) Ausbringen der Mischung von A und B aus dem Mischer.

Der verwendete Mischer verfügt über eine Mischkammer und eine dieser vorgelagerte Verzögerungskammer, die eine den Pastenstrom in Strömungsrichtung stoppende Begrenzungswand aufweist.

Die in den Mischer eintretende Pastenkomponente A mit dem größeren Volumenanteil befüllt die Verzögerungskammer und wird dort an der Begrenzungswand gestaut bevor sie mit der Pastenkomponente B gemischt und aus dem Mischer ausgebracht wird.

Bevorzugte Ausführungsbeispiele werden nachstehend anhand der Zeichnungen erläutert.
- Figur 1: zeigt eine Explosionszeichnung eines Mischers gemäß DE 298 18 499 U.
- Figur 2: zeigt eine Explosionszeichnung des erfindungsgemäßen Mischers.
- Figur 3: zeigt eine Explosionszeichnung des erfindungsgemäßen Mischers gemäß Figur 2 in rückwärtiger Ansicht.
- Figur 4: zeigt eine Schnittzeichnung durch den Eingangsbereich des Mischers.

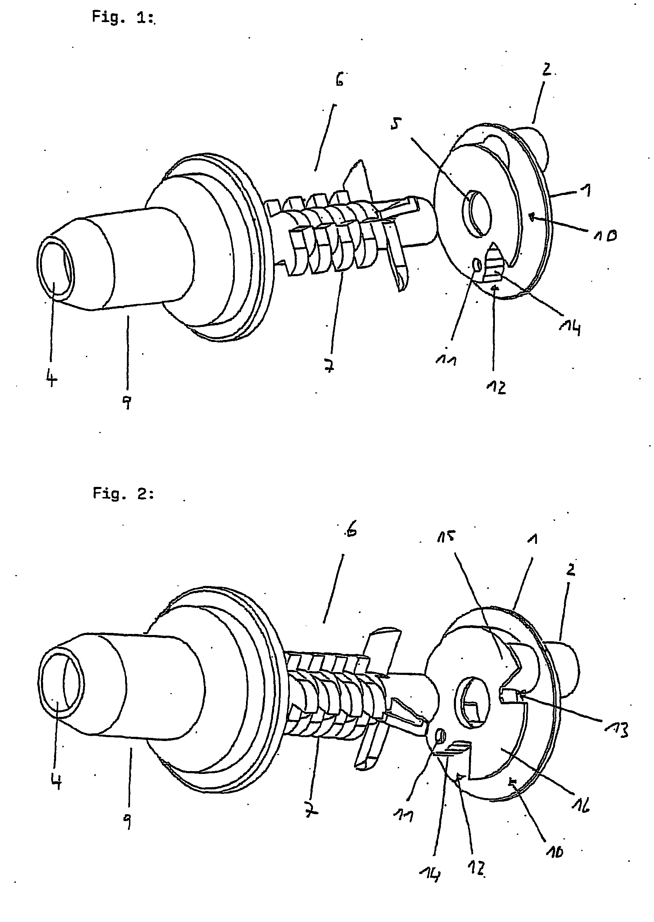

Der Mischer gemäß Figur 1 ist aus dem Stand der Technik bekannt. Er weist eine Basisplatte 1 mit zwei Einlassöffnungen 2 und 3, ein Gehäuse 9 mit einer Auslassöffnung 4 und ein Mischelement 6 auf. Das Mischelement 6 ist mit Mischflügeln 7 versehen. Die Verzögerungskammer 10 erstreckt sich längs eines Bogens um die Längsachse des Mischers und wird von einer Begrenzungswand 14 abgeschlossen.. Unmittelbar an der Begrenzungswand 14 befindet sich eine Öffnung 12 für die Pastenkomponente A, die in die Mischkammer mündet. Die Pastenkomponente B mit dem kleineren Volumenanteil mündet über die Öffnung 11 in die Mischkammer.

Die Pastenkomponente A läuft zunächst geführt entlang der Flächen 1 und 15 und wird durch die dazu quer angeordnete Begrenzungswand 14 gestoppt. Die Öffnung 13 für den Austritt der Komponente A aus der Verzögerungskammer in die Mischkammer ist in der Prallplatte 15 im Abstand zur Begrenzungswand 14 entgegen der anfänglichen Pastenströmungsrichtung der Komponente A zurückversetzt angeordnet.

In Figur 2 ist eine Ausführungsform für einen erfindungsgemäßen Mischer in einer Explosionszeichnung dargestellt. Der Mischer weist im wesentlichen die gleichen Elemente wie der in Figur 1 dargestellte Mischer auf. Zusätzlich verfügt der erfindungsgemäße Mischer aber über eine Öffnung 13, die gegenüber der Begrenzungswand 14 zurückversetzt ist. Die Öffnung 12, die sich unmittelbar an die Begrenzungswand 14 anschließt ist fakultativ. Die Verzögerungskammer 10 erstreckt sich vorzugsweise längs eines Bogens um die Längsachse des Mischers und wird u.a. von der Begrenzungswand 14, der Unterseite der Basisplatte 1, der sich gegenüber der Einlassöffnung 2 befindenden Prallplatte 15 und dem kreissegmentförmigen Element 16 gebildet.

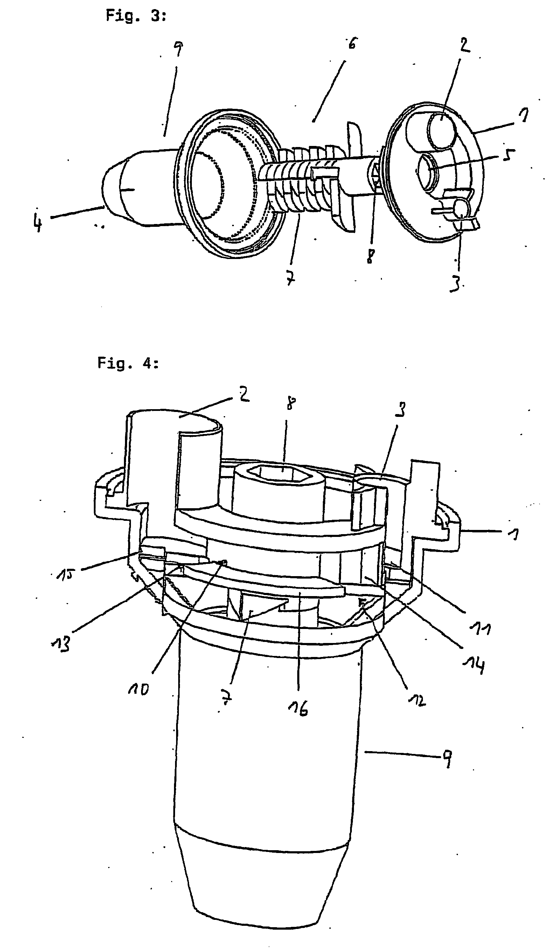

In Figur 3 ist der Mischer gemäß Figur 2 aus einer anderen Perspektive dargestellt. Zu erkennen sind insbesondere die beiden. Einlassöffnungen 2 und 3 für die beiden Pastenkomponenten A und B, die an die Basisplatte 1 angeformt sind, die. Aufnahmeöffnung 5 für die Mischwendel 6 und die 6-eckige Formnut 8, in die die Antriebswelle für die Mischwendel 6 eingreifen kann.

Figur 4 zeigt eine Schnittzeichnung durch den Eingangsbereich des Mischers gemäß Figur 2 und 3. Insbesondere zu erkennen sind die Strömungskanäle für die beiden Pastenkomponenten A und B. Die Pastenkomponente B tritt durch die Öffnung 3 in den Mischer ein und gelangt ohne wesentliche Ablenkung über die Öffnung 11 in die Mischkammer, in der die Mischflügel 7 rotieren. Die Pastenkomponente A tritt über die Öffnung 2 in den Mischer ein, trifft auf die Prallplatte 15, wird dort um etwa 90° umgelenkt und in die Verzögerungskammer entlang des kreissegmentförmigen Elements geleitet. Der Pastenstrom wird durch die Begrenzungswand 14 gestoppt, die gestaute Luft kann durch die Öffnung 12 entweichen. Sobald die Verzögerungskammer gefüllt ist, kann die Pastenkomponente A über die Öffnung 12 und insbesondere die gegenüber der Begrenzungswand zurückversetze Öffnung 13 in die Mischkammer eintreten.

### Bezugszeichenliste

- 1.: Basisplatte
- 2.: Einlassöffnung A
- 3.: Einlassöffnung B
- 4.: Auslassöffnung
- 5.: Aufnahmeöffnung für die Antriebswelle
- 6.: Mischelement
- 7.: Mischflügel
- 8.: Formnut
- 9.: Gehäuse
- 10.: Verzögerungskammer
- 11.: Öffnung für die Paste B in die Mischkammer
- 12.: Öffnung für die Paste A in die Mischkammer
- 13.: zurückversetzte Öffnung für die Paste A in die Mischkammer
- 14.: Begrenzungswand
- 15.: Prallfläche
- 16.: kreisförmiges Segment

## Patentansprüche

1. Dynamischer Mischer zum Mischen von mindestens zwei Pastenkomponenten A und B, wobei A im Vergleich zu B einen grösseren Volumenanteil aufweist, umfassend ein Gehäuse (9) mit mindestens zwei Einlassöffnungen für A (2) und B (3) und mindestens einer Auslassöffnung (4), in dem ein Mischerelement (6) in einer Mischkammer drehbar gelagert ist, wobei das Gehäuse (9) mindestens eine Verzögerungskammer (10), die mindestens eine den Pastenstrom in Strömungsrichtung stoppende Begrenzungswand (14) und mindestens eine Öffnung (13) aufweist, die in die Mischkammer mündet, wobei diese mindestens eine Öffnung (13) gegenüber der Begrenzungswand (14) zurückversetzt ist; und
wobei diese mindestens eine Öffnung (13) in mindestens einem Punkt der Einlassöffnung für A (2) gegenübersteht.

2. Mischer nach Anspruch 1, wobei die mindestens eine Verzögerungskammer (10) eine weitere Öffnung (12) aufweist, die in die Mischkammer mündet.

3. Mischer nach einem der vorstehenden Ansprüche, wobei das Volumenverhältnis von Verzögerungskammer zum Volumen der Mischkammer im Bereich von 1:1 bis 1 : 20 liegt.

4. Mischer nach einem der vorstehenden Ansprüche, wobei das Verhältnis von Einlassöffnung für A zur Auslassöffnung (4) im Bereich von 1 : 1 bis 1 : 5 liegt.

5. Verwendung des Mischers nach einem der vorstehenden Ansprüche zum Mischen von mindestens zwei Pastenkomponenten deren Volumenanteil im Bereich von 1 : 2 bis 1 : 10 liegn.

6. Verwendung nach Anspruch 5, wobei die Paste mit dem grösseren Volumenanteil eine Viskosität von mindestens 800 Pas aufweist.

7. Kombination aus einem Mischer nach einem der Ansprüche 1 bis 4 und einem Mischgerät, auf das der Mischer aufgesetzt werden kann, wobei der Mischer und das Mischgerät, das eine Fördereinrichtung zur Förderung der Pasten aufweist, so aufeinander abgestimmt sind, dass die Förderkraft, die vom Mischgerät aufzubringen ist, 4000 N nicht übersteigt.

8. Verfahren zum Mischen von mindestens zwei Pastenkomponenten A und B mit einem dynamischen Mischer nach einem der Ansprüche 1 bis 4, wobei A im Vergleich zu B einen grösseren Volumenanteil aufweist, umfassend folgende Schritte: a) Ausbringen von A und B aus einem Behältnis unter Verwendung von Förderkolben, b) Einbringen von A und B in den dynamisch en Mischer, der mit dem Behältnis verbunden werden kann, wobei der Mischer eine Mischkammer und eine Verzögerungskammer aufweist, die eine den Pastenstrom in Strömungsrichtung stoppende Begrenzungswand umfasst, c) Mischen von A und B unter Verwendung des dynamischen Mischers, d) Ausbringen der Mischung von A und B aus dem Mischer, wobei A vor dem Mischen und Ausbringen mit B in die Verzögerungskammer geleitet, dort gestaut wird und aus der Verzögerungskammer über die eine Öffnung in die Mischkammer gelangen kann, die gegenüber der Begrenzungswand zurückversetzt ist.

9. Verfahren nach Anspruch 8, wobei die Pastenkomponente A, bevor sie in die Mischkammer gelangt, im Mischer nicht um 90° umgelenkt zu werden braucht.

10. Verfahren nach einem der Ansprüche 8 oder 9, wobei die Pastenkomponente A, nachdem sie die Verzögerungskammer gefüllt hat, im wesentlichen nicht mehr umgelenkt wird.

## Claims

1. Dynamic mixer for mixing at least two paste components A and B, A having a higher proportion by volume than B, comprising a housing (9) with at least two inlet openings for A (2) and B (3) and at least one outlet opening (4), in which a mixing element (6) is rotatably mounted in a mixing chamber, the housing (9) having at least one delay chamber (10), which has a boundary wall (14) that stops the paste stream in the flow direction and at least one opening (13) which opens into the mixing chamber, this at least one opening being set back with respect to the boundary wall, and this at least one opening (13) being opposite the inlet opening for A (2) at at least one point.

2. Mixer according to Claim 1, the at least one delay chamber (10) having a further opening (12) which opens into the mixing chamber.

3. Mixer according to one of the preceding claims, the ratio of the volume of the delay chamber to the volume of the mixing chamber lying in the range from 1:1 to 1:20.

4. Mixer according to one of the preceding claims, the ratio of the inlet opening for A to the outlet opening (4) lying in the range from 1:1 to 1:5.

5. Use of Mixer according to one of the preceding claims for mixing at least two paste components whose proportion by volume lies in the range from 1:2 to 1:10.

6. Use according to Claim 5, the paste with the higher proportion by volume having a viscosity of at least 800 Pas.

7. Combination of a mixer according to one of Claims 1 to 4 and a mixing appliance on which Mixer can be placed, Mixer and the mixing appliance, which has a conveying device for conveying the pastes, being coordinated with each other in such a way that the conveying force which the mixing appliance has to apply does not exceed 4000 N.

8. Method for mixing at least two paste components A and B with a dynamic mixer according to one of Claims 1 to 4, A having a higher proportion by volume than B, comprising the following steps: a) discharging A and B from a container by using delivery pistons, b) introducing A and B into the dynamic mixer which can be connected to a container, Mixer having a mixing chamber and a delay chamber which comprises a boundary wall that stops the paste stream in the flow direction, c) mixing A and B by using the dynamic mixer, d) discharging the mixture of A and B from Mixer, A being led into the delay chamber before being mixed and discharged with B, being backed up there and being able to get into the mixing chamber from the delay chamber via an opening which is set back with respect to the boundary wall.

9. Method according to Claim 8, the paste component A not needing to be deflected through 90° in Mixer before it gets into the mixing chamber.

10. Method according to either of Claims 8 and 9, the paste component A substantially no longer being deflected after it has filled the delay chamber.

## Revendications

1. Mélangeur dynamique pour le mélange d'au moins deux composants en pâte A et B, A présentant une plus grande proportion en volume que B, qui comprend un boîtier (9) doté d'au moins deux ouvertures d'entrée pour A (2) et B (3) et au moins une ouverture de sortie (4), dans lequel un organe de mélange (6) est monté à rotation dans une chambre de mélange, le boîtier (9) présentant au moins une chambre de ralentissement (10) qui présente au moins une paroi de séparation (14) qui arrête l'écoulement de pâte dans la direction d'écoulement et au moins une ouverture (13) qui débouche dans là chambre de mélange, cette au moins une ouverture étant en recul par rapport à la paroi de séparation et cette au moins une ouverture (13) étant située face à au moins un point de l'ouverture d'entrée prévue pour A (2).

2. Mélangeur selon la revendication 1, dans lequel l'au moins une chambre de ralentissement (10) présente une autre ouverture (12) qui débouche dans la chambre de mélange.

3. Mélangeur selon l'une des revendications précédentes, dans lequel la proportion en volume entre la chambre de ralentissement et la chambre de mélange est comprise dans la plage de 1:1 à 1:20.

4. Mélangeur selon l'une des revendications précédentes, dans lequel la proportion entre l'ouverture d'entrée de A et l'ouverture de sortie (4) est comprise dans la plage de 1:1 à 1:5.

5. Utilisation du mélangeur selon l'une des revendications précédentes pour mélanger au moins deux composants en pâte dont les proportions en volume sont comprises dans la plage de 1:2 à 1:10.

6. Utilisation selon la revendication 5, dans laquelle la pâte qui présente la plus grande proportion en volume a une viscosité d'au moins 800 Pa.s.

7. Combinaison d'un mélangeur selon l'une des revendications 1 à 4 et d'un appareil de mélange sur lequel le mélangeur peut être placé, le mélangeur et l'appareil de mélange qui présente un dispositif de transport pour transporter les pâtes étant accordés l'un à l'autre de telle sorte que la force de transport qui doit être appliquée par l'appareil de mélange ne dépasse pas 4 000 N.

8. Procédé pour mélanger au moins deux composants en pâte A et B avec un mélangeur dynamique selon l'une des revendications 1 à 4, A présentant une plus grande proportion en volume que B, lequel procédé comprend les étapes suivantes:
a) extraction de A et de B d'un récipient en utilisant un piston de transport,
b) introduction de A et B dans le mélangeur dynamique qui peut être relié au récipient, le mélangeur présentant une chambre de mélange et une chambre de ralentissement qui comporte une paroi de séparation qui arrête l'écoulement de pâte dans la direction d'écoulement,
c) mélange de A et de B en utilisant le mélangeur dynamique,
d) extraction du mélange de A et de B hors du mélangeur, A étant amené dans la chambre de ralentissement avant le mélange et l'extraction avec B pour y être accumulé et passé de la chambre de ralentissement à la chambre de mélange par une ouverture qui est en recul par rapport à la paroi de séparation.

9. Procédé selon la revendication 8, dans lequel le composant en pâte A ne doit pas être dévié de 90° avant de passer dans la chambre de mélange.

10. Procédé selon l'une des revendications 8 ou 9, dans lequel le composant en pâte A n'est essentiellement plus dévié après avoir rempli la chambre de ralentissement.
